# EUROPÄISCHE PATENTSCHRIFT

(11) **EP 1 211 584 B1**
(45) Veröffentlichungstag und Bekanntmachung des Hinweises auf die Patenterteilung: **31.08.2005**
(21) Anmeldenummer: 01126311.8
(22) Anmeldetag: 06.11.2001
(51) Int. Cl.: G05B 23/02

(54) **Anzeigevorrichtung**
Display device
Dispositif d'affichage

(30) Priorität: 24.11.2000 DE 10058410
(43) Veröffentlichungstag der Anmeldung: 05.06.2002
(73) Patentinhaber: BSH Bosch und Siemens Hausgeräte GmbH, 81739 München (DE)
(72) Erfinder: Schmid, Erich, 93173 Wenzenbach (DE); Laaser, Walter, Dr. rer.nat., 93164 Laaber (DE)

(56) Entgegenhaltungen:
- EP-A- 0 841 822
- GB-A- 2 279 969
- US-A- 5 363 290
- US-A- 5 570 596
- US-A- 5 649 094
- US-A- 5 694 793

## Beschreibung

Die Erfindung betrifft eine Anzeigevorrichtung für ein elektrisches Gerät, insbesondere eine Statusanzeige für ein elektrisches Haushaltsgerät, gemäß den Merkmalen der unabhängigen Ansprüche 1 und 8.

Anzeigevorrichtungen und insbesondere Statusanzeigen für elektrische Geräte sind in den vielfältigsten Ausführungsformen bekannt. Für eine Bedienperson eines elektrischen Haushaltsgerätes ist es wünschenswert, über den aktuellen Betriebszustand informiert zu sein. So ist es beispielsweise wünschenswert, den Status des Gerätes, den Fortschritt oder die Restlaufzeit eines ablaufenden Programms jederzeit über eine Statusanzeige am Gerät ablesen zu können. Dies betrifft insbesondere solche Geräte, die aufgrund ihrer geschlossenen Bauform oder ihres Prinzips keine optische Kontrolle des Programmfortschrittes erlauben, wie bspw. Waschmaschinen, Wäschetrockner, Geschirrspüler oder dergleichen. US-A-569479 und EP-0 841 822-A1 zeigan Geräte gemäß dem Stand der Technik.

Die Tatsache, dass das Gerät eingeschaltet ist und/oder sich im laufenden Betrieb befindet, wird typischerweise mittels einer farbigen Kontrollleuchte in einer Gerätefrontseite signalisiert, beispielsweise mittels einer farbigen Leuchtdiode. Ein Programmfortschritt kann bspw. mittels eines sich entlang einer umlaufenden Skala drehenden Drehschalters, mittels eine Leuchtbalkenanzeige mit nebenstehenden Stichworten oder auch mittels einer alphanumerischen Leuchtanzeige signalisiert und dargestellt werden. Auch sind Klarschriftanzeigen an Gerätefrontseiten bekannt, die einen Programmfortschritt in Worten darstellen.

Nachteilig an diesen bekannten Statusanzeigen, sofern sie überhaupt vorhanden sind, ist der relative Bau- und/oder Schaltungsaufwand, der notwendig ist, um für eine Bedienperson ein Minimum an Informationsgehalt zur Verfügung zu stellen.

Die Aufgabe der Erfindung besteht darin, eine Anzeigevorrichtung für ein elektrisches Gerät zur Verfügung zu stellen, das bei minimalem Bauaufwand eine ausreichende Information für eine Bedienperson über den aktuellen Status des Geräts liefern kann.

Diese Aufgabe der Erfindung wird durch die Merkmale der unabhängigen Ansprüche 1 und 8 gelöst. Ein wesentlicher Vorteil der Erfindung besteht darin, dass mit nur einer einzigen Statusanzeige eine ausreichende Statusinformation über den aktuellen Betriebszustand eines elektrischen Gerätes geliefert werden kann. So besteht eine erfindungsgemäße Anzeigevorrichtung für ein elektrisches Gerät, das ein Programm mit unterschiedlichen Zuständen durchlaufen kann, aus wenigstens einem Leuchtmittel an einem für eine Bedienperson sichtbaren Einbauort an einer Außenfläche des elektrischen Geräts, wobei die Anzeigevorrichtung bei unterschiedlichen Programmzuständen des elektrischen Geräts eine unterschiedlich intermittierende Lichtemission aufweist. Die unterschiedlich intermittierende Lichtabstrahlung kann vorzugsweise so erfolgen, dass unterschiedlichen Programmzuständen jeweils unterschiedliche Abfolgen von Lichtimpulsen sowie zwischen den Lichtimpulsen liegende Pausen zugewiesen sind.

Ebenso kann die Anzeigevorrichtung bei unterschiedlichen Restlaufzeiten des Programms des elektrischen Geräts eine unterschiedlich intermittierende Lichtemission aufweisen, wobei bevorzugt unterschiedlichen Restlaufzeiten des Programms jeweils unterschiedliche Abfolgen von Lichtimpulsen und dazwischen liegenden Pausen zugewiesen sind. Dabei kann die Anzeige des Programmfortschrittes und der Restlaufzeit entweder durch ein einziges Leuchtmittel oder wahlweise auch durch mehrere getrennte Leuchtmittel erfolgen.

Eine differenzierte Information eines Benutzers kann vorteilhaft dadurch sichergestellt werden, dass das Leuchtmittel, bspw. eine Leuchtdiode, wenigstens drei oder vier unterschiedliche Einzelsignale abstrahlen kann, wobei die vier unterschiedlichen Einzelsignale aus den Signalen "kurz", "mittel", "lang" und "Pause" bestehen können, und wobei die Signale "kurz", "mittel", "lang" und "Pause" vorzugsweise jeweils die Einschaltdauer des Leuchtmittels zwischen kurzen Pausen repräsentieren. Mittels dieser verschieden langen Einzelsignale kann die Bedienperson relativ genau über den Programmfortschritt oder die Restlaufzeit informiert werden, ohne dass irgendwelche zusätzlichen Anzeigevorrichtungen oder -komponenten notwendig wären. Das Leuchtmittel der Anzeigevorrichtung kann vorzugsweise direkt von einer elektronischen Steuerung des elektrischen Geräts angesteuert werden, wodurch ein sehr einfacher Schaltungsaufbau resultiert.

Weitere vorteilhafte Ausbildungen und Verbesserungen der Erfindung sind in den Unteransprüchen angegeben.

Die Erfindung wird im folgenden anhand eines Ausführungsbeispiels näher erläutert. In dem Ausführungsbeispiel sind verschiedenen Betriebszuständen einer Waschmaschine jeweils beispielhafte optische Codierungen zugeordnet.

Eine bereits vorhandene Leuchtanzeige bzw. Leuchtdiode, welche anzeigt, dass die Waschmaschine eingeschaltet ist, kann durch getaktete Ansteuerung wahlweise einen Programmfortschritt oder auch eine Restlaufzeit des Waschprogramms anzeigen. Einer Bedienperson wird die Erkennung und Zuordnung der verschiedenen angezeigten Taktcodes dadurch wesentlich erleichtert, wenn auf der Frontseite des Haushaltsgeräts, bspw. auf einer Blende, die verschiedenen Codierungen aufgedruckt sind.

Eine beispielhafte Codierung zur Anzeige des Programmfortschritts kann folgenden Betriebszuständen der Waschmaschine folgende Taktungen der Lichtabstrahlung des Leuchtmittels zuordnen:
- Vorwäsche:: - - ___(kurz, kurz, Pause);
- Hauptwäsche:: - --- ____ (kurz, lang, Pause);
- Spülen:: --- --- ____(lang, lang, Pause);
- Störung:: - - - - - - - (kurz, kurz, kurz, ...).

Während der gesamten Laufzeit der Vorwäsche leuchtet die Anzeigevorrichtung somit je zweimal kurz auf, um dann eine längere Zeitperiode dunkel zu bleiben. Danach wiederholt sich dieser Zyklus so lange, wie die Vorwäsche andauert. Ein kurzes Aufleuchten in diesem Sinne kann bspw. eine Zeitdauer von 0,5 Sekunden umfassen; eine Pause in diesem Sinne kann bspw. eine Zeitdauer von 2 Sekunden umfassen.

Während der gesamten Laufzeit der Hauptwäsche leuchtet die Anzeigevorrichtung je einmal kurz und einmal lang auf, um dann eine längere Zeitperiode dunkel zu bleiben. Danach wiederholt sich dieser Zyklus so lange, wie die Hauptwäsche andauert. Ein langes Aufleuchten in diesem Sinne kann bspw. eine Zeitdauer von 1 Sekunde umfassen; eine Pause kann wiederum eine Zeitdauer von 2 Sekunden umfassen.

Während der gesamten Laufzeit des Spülganges leuchtet die Anzeigevorrichtung je zweimal lang auf, um dann eine längere Zeitperiode dunkel zu bleiben. Danach wiederholt sich dieser Zyklus so lange, wie der Spülvorgang andauert.

Ein Schleudervorgang bei einer Waschmaschine könnte ebenfalls durch einen derartigen Code angezeigt werden, was aber in aller Regel nicht notwendig ist, da der Schleudervorgang ohne weiteres akustisch wahrgenommen werden kann.

Eine beispielhafte Codierung zur Anzeige der Restlaufzeit kann folgenden Zeitabschnitten folgende Taktungen zuordnen:
- Stunde:: --- (lang);
- 10 Minuten:: -- (mittel);
- Minute:: - (kurz).

Ein kurzes Aufleuchten in diesem Sinne kann bspw. eine Zeitdauer von 0,5 Sekunden, ein mittellanges Aufleuchten eine Zeitdauer von 1 Sekunde und ein langes Aufleuchten eine Zeitdauer von 2 Sekunden umfassen. Jedoch sind sowohl für die Anzeige des Programmfortschrittes wie auch für die Anzeige der Restlaufzeit auch beliebig andere Zeitdauern für die Lichtimpulse "kurz", "mittel", "lang" denkbar, sofern sie für das menschliche Wahrnehmungsvermögen deutlich als unterschiedliche Zeitdauern wahrgenommen werden können.

Eine Restlaufzeit von einer Stunde und 32 Minuten könnte dann folgendermaßen dargestellt werden: --- -- -- -- - -__ (lang, mittel, mittel, mittel, kurz, kurz, Pause).

Ob das Leuchtmittel den Programmfortschritt oder die Restlaufzeit anzeigen soll, kann vorzugsweise von der Bedienperson selbst mittels eines Schalters ausgewählt werden. Ebenso möglich ist jedoch eine abwechselnde Anzeige der beiden Modi (Status oder Restlaufzeit) für jeweils einen bestimmten Zeitraum von bspw. einer oder zwei Minuten.

Die erfindungsgemäße Anzeigevorrichtung kann selbstverständlich nicht nur bei Waschmaschinen Anwendung finden, sondern ist prinzipiell bei jedem elektrischen Gerät, insbesondere bei jedem elektrischen Haushaltsgerät einsatzbar.

## Patentansprüche

1. Anzeigevorrichtung für ein elektrisches Gerät, insbesondere Statusanzeige für ein elektrisches Haushaltsgerät, das ein Programm mit unterschiedlichen Zuständen durchlaufen kann, bestehend aus wenigstens einem Leuchtmittel an einem für eine Bedienperson sichtbaren Einbauort an einer Außenfläche des elektrischen Geräts, **gekennzeichnet durch** eine unterschiedlich intermittierende Lichtemission des wenigstens einen Leuchtmittels bei unterschiedlichen Programmzuständen und/oder unterschiedlichen Restlaufzeiten des elektrischen Geräts, und **durch** eine Codierung der intermittierenden Lichtemission, die unterschiedlichen Programmzuständen und/oder unterschiedlichen Restlaufzeiten jeweils unterschiedliche Abfolgen von Lichtimpulsen und dazwischen liegenden Pausen zuweist.

2. Anzeigevorrichtung nach Anspruch 1, **gekennzeichnet durch** jeweils ein Leuchtmittel zur Anzeige des Programmstatus und zur Anzeige der Restlaufzeit.

3. Anzeigevorrichtung nach Anspruch 1 oder 2, **gekennzeichnet durch** wenigstens drei unterschiedliche Einzelsignale des Leuchtmittels.

4. Anzeigevorrichtung nach Anspruch 3, **dadurch gekennzeichnet, dass** die wenigstens drei unterschiedlichen Einzelsignale aus den Signalen "kurz", "lang" oder "Pause" bestehen, wobei die Signale "kurz", "lang" und "Pause" jeweils die Einschaltdauer des Leuchtmittels repräsentieren.

5. Anzeigevorrichtung nach Anspruch 1 oder 2, **gekennzeichnet durch** wenigstens vier unterschiedliche Einzelsignale des Leuchtmittels.

6. Anzeigevorrichtung nach Anspruch 5, **dadurch gekennzeichnet, dass** die wenigstens vier unterschiedlichen Einzelsignale aus den Signalen "kurz", "mittel", "lang" und "Pause" bestehen, wobei die Signale "kurz", "mittel", "lang" und "Pause" jeweils die Einschaltdauer des Leuchtmittels repräsentieren.

7. Anzeigevorrichtung nach einem der vorstehenden Ansprüche, **dadurch gekennzeichnet, dass** das wenigstens eine Leuchtmittel eine Leuchtdiode ist.

8. Verfahren zur Statusanzeige für ein elektrisches Gerät, insbesondere für ein elektrisches Haushaltsgerät, das ein Programm mit unterschiedlichen Zuständen durchlaufen kann, und das wenigstens ein Leuchtmittel an einem für eine Bedienperson sichtbaren Einbauort an einer Außenfläche des elektrischen Geräts aufweist, **gekennzeichnet durch** eine unterschiedlich intermittierende Lichtemission des wenigstens einen Leuchtmittels bei unterschiedlichen Programmzuständen und/oder unterschiedlichen Restlaufzeiten des elektrischen Geräts, und **durch** eine Codierung der intermittierenden Lichtemission, die unterschiedlichen Programmzuständen und/oder unterschiedlichen Restlaufzeiten jeweils unterschiedliche Abfolgen von Lichtimpulsen und dazwischen liegenden Pausen zuweist.

9. Verfahren zum Betrieb einer Anzeigevorrichtung nach einem der Ansprüche 1 bis 7.

## Claims

1. Indicating device for an electrical appliance, particularly a status indicator for an electrical domestic appliance able to run through a program with different states, consisting of at least one lighting means at an installation location, which is visible to a user, at an outer surface of the electrical appliance, **characterised by** a different intermittent light emission of the at least one lighting means in the case of different program states and/or different residual running times of the electrical appliance and by a coding of the intermittent light emission allocated to the different program states and/or different residual running times respectively of different sequences of light pulses and intermediate pauses.

2. Indicating device according to claim 1, **characterised by** a lighting means for indicating the program status and for indicating the residual running time.

3. Indicating device according to claim 1 or 2, **characterised by** at least three different individual signals of the lighting means.

4. Indicating device according to claim 3, **characterised in that** the at least three different individual signals consist of the signals 'short', 'long' and 'pause', wherein the signals 'short', 'long' and 'pause' each represent the switch-on duration of the lighting means.

5. Indicating device according to claim 1 or 2, **characterised by** at least four different individual signals of the lighting means.

6. Indicating device according to claim 5, **characterised in that** the at least four different individual signals consist of the signals 'short', 'medium', 'long' and 'pause', wherein the signals 'short', 'medium', 'long' and 'pause' each represent the switch-on duration of the lighting means.

7. Indicating device according to one of the preceding claims, **characterised in that** the at least one lighting means is a light-emitting diode.

8. Method for status indication for electrical appliance, particularly for an electrical domestic appliance, which can run through a program with different states and has at least one lighting means at an installation location, which is visible to a user, at an outer surface of the electrical appliance, **characterised by** a different intermittent light emission of the at least one lighting means in the case of different program states and/or different residual running times of the electrical appliance and by a coding of the intermittent light emission allocated to the different program states and/or different residual running times respectively of different sequences of light pulses and intermediate pauses.

9. Method of operating an indicating device according to one of claims 1 to 7.

## Revendications

1. Dispositif d'affichage pour un appareil électrique, notamment affichage d'état pour un appareil ménager électrique capable de parcourir un programme avec différents états, constitué d'au moins un moyen lumineux placée à un endroit visible pour un utilisateur sur une surface extérieure de l'appareil électrique, **caractérisé par** une émission de lumière à intermittence différentielle de l'au moins un moyen lumineux à différents états du programme et/ou différents temps d'exécution restants de l'appareil électrique, et par un codage de l'émission de lumière intermittente, qui attribue respectivement différentes successions d'impulsions de lumière et de pauses entre celles-ci à différents états du programme et/ou différents temps d'exécution restants.

2. Dispositif d'affichage selon la revendication 1, **caractérisé par** un moyen lumineux respectif destiné à afficher l'état du programme et le temps d'exécution restant.

3. Dispositif d'affichage selon la revendication 1 ou 2, **caractérisé par** au moins trois signaux individuels différents du moyen lumineux.

4. Dispositif d'affichage selon la revendication 3, **caractérisé en ce que** les au moins trois signaux individuels différents sont constitués des signaux "courts", "longs" ou "pause", les signaux "courts", "longs" et "pause" représentant chacun le temps d'allumage du moyen lumineux.

5. Dispositif d'affichage selon la revendication 1 ou 2, **caractérisé par** au moins quatre signaux individuels différents du moyen lumineux.

6. Dispositif d'affichage selon la revendication 5, **caractérisé en ce que** les au moins quatre signaux individuels différents sont constitués des signaux "courts", "moyens", longs" et "pause", les signaux "courts", "moyens", "longs" et "pause" représentant chacun le temps d'allumage du moyen lumineux.

7. Dispositif d'affichage selon l'une des revendications précédentes, **caractérisé en ce que** l'au moins un moyen lumineux est une diode électroluminescente.

8. Procédé pour afficher l'état d'un appareil électrique, notamment d'un appareil ménager électrique capable de parcourir un programme avec différents états et qui comporte au moins un moyen lumineux disposé à un endroit visible d'un utilisateur selon une surface extérieure d'un appareil électrique, **caractérisé par** une émission de lumière à intermittence différentielle de l'au moins un moyen lumineux à différents états du programme et/ou différents temps d'exécution restants de l'appareil électrique et par un codage de l'émission de lumière intermittente, qui attribue respectivement différentes successions d'impulsions lumineuses et les pauses entre celles-ci à différents états du programme et/ou différents temps d'exécution restants.

9. Procédé d'exploitation d'un dispositif d'affichage selon l'une des revendications 1 à 7.
